# EUROPEAN PATENT APPLICATION

(11) **EP 4 667 868 A1**
(43) Date of publication of application: **24.12.2025**
(21) Application number: 23922349.8
(22) Date of filing: 27.10.2023
(51) Int. Cl.: G01B 11/245, G06T 17/00

(54) **THREE-DIMENSIONAL PROFILER, THREE-DIMENSIONAL PROFILE ESTABLISHMENT METHOD AND APPARATUS, AND ELECTRONIC DEVICE**

(30) Priority: 13.02.2023 CN 202310129603
(71) Applicant: Hangzhou Hikrobot Co., Ltd., Hangzhou, Zhejiang 310051 (CN)
(72) Inventor: ZHANG, Tianyi, Hangzhou, Zhejiang 310051 (CN); LONG, Xuexiong, Hangzhou, Zhejiang 310051 (CN)
(74) Representative: Epping - Hermann - Fischer
(86) International application number: PCT/CN2023/127037
(87) International publication number: WO 2024/169233

(57) **Abstract**

A three-dimensional profiler, a three-dimensional profile establishment method and apparatus, and an electronic device. The three-dimensional profiler comprises a first area array camera, a second area array camera, a laser and a processor, wherein the laser is arranged between the first area array camera and the second area array camera; a lens plane of a first lens, an image plane of a first area array sensor, a lens plane of a second lens, an image plane of a second area array sensor, and a laser plane of the laser intersect on the same straight line; and the processor is used for determining, by combining a first laser gray scale image and a second laser gray scale image, the three-dimensional profile of an object to be measured. Double cameras are used for performing multi-angle photographing, thereby effectively reducing photographic blind areas. Therefore, overall three-dimensional data of an object can be photographed, thereby reducing the problem of missed detection caused by a blind area. Moreover, interference such as stray light can be determined and removed according to the imaging difference between two area array cameras, such that the robustness of a device in terms of coping with interference such as stray light and reflected light can be effectively improved.

## Description

The present application claims the priority to a Chinese patent application 202310129603.0 filed with the China National Intellectual Property Administration (CNIPA) on February 13, 2023 and entitled "THREE-DIMENSIONAL PROFILER, THREE-DIMENSIONAL PROFILE ESTABLISHMENT METHOD AND APPARATUS, AND ELECTRONIC DEVICE", which is incorporated herein by reference in its entirety.

### Technical Field

The present application relates to the technical field of visual inspection, in particular to a three-dimensional profiler, a three-dimensional profile establishment method and apparatus, and an electronic device.

### Background

There is a growing demand for 3D (Three-Dimensional) data in industrial manufacture inspections, including a demand for measurements which require not only data in X/Y directions such as length and width but also data of height in Z direction. The technologies currently applied in the field of industrial measurement and inspection mainly calculate three-dimensional data with a laser triangulation method, structured light phase calculation and binocular stereo calibration. Among them, the line laser 3D cameras used in the triangulation method has a low scanning speed and low accuracy in X/Y direction with typically around 3,000 points on a single line. The structured light projection technology usually requires projecting multiple images, and objects need to be photographed in a stationary state, so the efficiency is not high; and the projection device used in the structured light projection technology also has a low resolution, which leads to very limited accuracy in cases of projection under large field of view. Binocular stereo vision usually uses area scan cameras for calibration, which utilize the same shooting method as that of 2D area scan cameras, which is also mainly suitable for shooting square-shaped objects and also for shooting stationary objects.

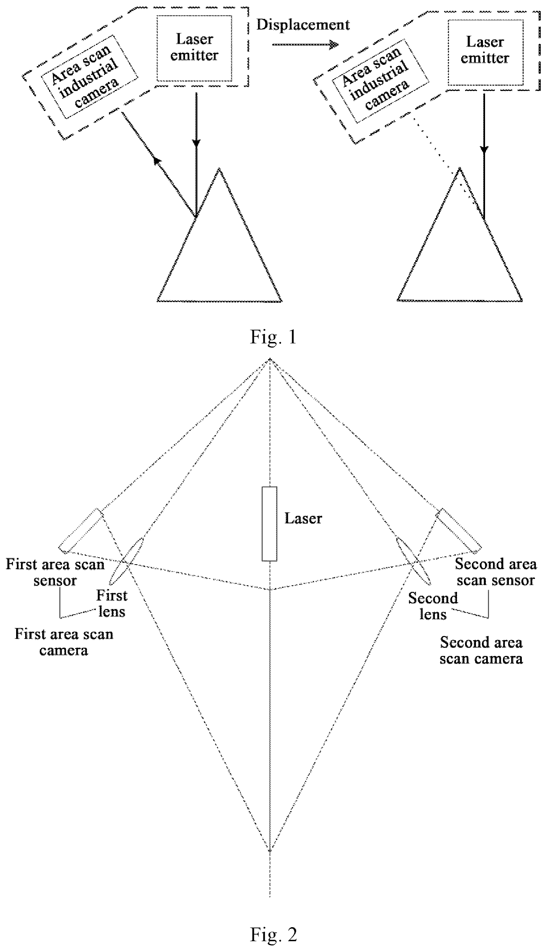

A related line laser 3D camera is shown in Fig. 1 with a main optical structure comprised of one laser emitter and one area scan industrial camera. After the camera is displaced, there will be a certain blind spot in the field of view.

### Summary

The purpose of embodiments of the present application is to provide a three-dimensional profiler, a three-dimensional profile establishment method and apparatus, and an electronic device, so as to reduce blind spots in field of view. Detailed technical solutions are as follows:
A first aspect of embodiments of the present application provides a three-dimensional profiler, comprising: a first area scan camera, a second area scan camera, a laser and a processor; wherein the first area scan camera comprises a first area scan sensor and a first lens, the second area scan camera comprises a second area scan sensor and a second lens; the laser is arranged between the first area scan camera and the second area scan camera; a lens plane of the first lens, an imaging plane of the first area scan sensor, a lens plane of the second lens, an imaging plane of the second area scan sensor, and a laser plane of the laser intersect on a same straight line; the laser is configured for emitting a laser beam; the first area scan camera is configured for capturing a first laser gray scale image of an object to be measured; the second area scan camera is configured for capturing a second laser gray scale image of the object to be measured; and the processor is configured for determining a three-dimensional profile of the object to be measured by combining the first laser gray scale image and the second laser gray scale image.
A second aspect of embodiments of the present application provides a three-dimensional profile establishment method applied to any one of the three-dimensional profilers of the present application, comprising: acquiring a first laser gray scale image of an object to be measured captured by a first area scan camera and a second laser gray scale image of the object to be measured captured by a second area scan camera; determining a three-dimensional profile of the object to be measured by combining the first laser gray scale image and the second laser gray scale image.
A third aspect of embodiments of the present application provides a three-dimensional profile establishment apparatus applied to any one of the three-dimensional profilers of the present application, comprising: a laser gray scale image acquisition module configured for acquiring a first laser gray scale image of an object to be measured captured by a first area scan camera and a second laser gray scale image of the object to be measured captured by a second area scan camera; and a three-dimensional profile determination module configured for determining a three-dimensional profile of the object to be measured by combining the first laser gray scale image and the second laser gray scale image.
A fourth aspect of embodiments of the present application provides an electronic device, comprising: a memory configured for storing a computer program; a processor configured for implementing any one of the three-dimensional profile establishment methods of the present application when executing the computer program stored in the memory.
A fifth aspect of embodiments of the present application provides a computer readable storage medium having stored therein a computer program stored, which when executed by the processor, causes the processor to carry out any one of the three-dimensional profile establishment methods of the present application.

Embodiments of the present application further provide a computer program product containing instructions, which, when running on a computer, cause the computer to carry out any one of the three-dimensional profile establishment methods of the present application.

### Advantageous Effects of the embodiments of the present application:

Embodiments of the present application provide a three-dimensional profiler, a three-dimensional profile establishment method and apparatus, and an electronic device. The three-dimensional profiler comprises: a first area scan camera, a second area scan camera, a laser and a processor; wherein the first area scan camera comprises a first area scan sensor and a first lens, the second area scan camera comprises a second area scan sensor and a second lens; the laser is arranged between the first area scan camera and the second area scan camera; a lens plane of the first lens, an imaging plane of the first area scan sensor, a lens plane of the second lens, an imaging plane of the second area scan sensor, and a laser plane of the laser intersect on a same straight line; the laser is configured for emitting a laser beam; the first area scan camera is configured for capturing a first laser gray scale image of an object to be measured; the second area scan camera is configured for capturing a second laser gray scale image of the object to be measured; and the processor is configured for determining a three-dimensional profile of the object to be measured by combining the first laser gray scale image and the second laser gray scale image. Shooting images with two area scan cameras from two angles respectively can reduce blind spots in field of view. Of course, it is not necessary to achieve all the advantages described above simultaneously to implement any product or method of the present application.

### Brief Description of the Drawings

The drawings described here are intended to provide further understandings of the present application and to constitute a part of the present application. The illustrative embodiments of the present application and their descriptions are intended to explain the present application and do not constitute improper limitation on the present application.
Fig. 1 is a schematic diagram of a conventional line laser 3D camera forming a blind spot;
Fig. 2 is a schematic diagram of a three-dimensional profiler provided by an embodiment of the present application;
Fig. 3 is a flow chart of a first three-dimensional profile establishment method provided by an embodiment of the present application;
Fig. 4a is a flow chart of a second three-dimensional profile establishment method provided by an embodiment of the present application;
Fig. 4b is a first flow chart of step S310 in Fig. 3;
Fig. 5a is a flow chart of a first specific implementation of a first method of fusing a first center point area and a second center point area in a same camera coordinate system to obtain a fused center point area, provided by an embodiment of the present application;
Fig. 5b is a flow chart of a second specific implementation of a second method of fusing a first center point area and a second center point area in a same camera coordinate system to obtain a fused center point area, provided by an embodiment of the present application;
Fig. 6a is a flow chart of a third three-dimensional profile establishment method provided by an embodiment of the present application;
Fig. 6b is a second flow chart of step S320 in Fig. 3;
Fig. 7 is a flow chart of a specific implementation of performing point cloud fusion based on third three-dimensional point cloud coordinates and fourth three-dimensional point cloud coordinates to obtain fused three-dimensional point cloud coordinates, provided by an embodiment of the present application;
Fig. 8 is a schematic diagram of a structure of a three-dimensional profile establishment apparatus provided by an embodiment of the present application.
Fig. 9 is a schematic diagram of a structure of an electronic device provided by an embodiment of the present application.

### Detailed Description

In order to make the purpose, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall within the protection scope of the present application.

Specialized terminologies are explained for ease of understanding:
Depth map: it refers to an image where pixel values represent distances (depths) from an image collector to respective points in a scene, which directly reflects the geometric shape of the visible surface in the scene. Depth map may be converted into point cloud data through coordinate transformation, while structured point cloud data with essential information may also be reversely reconstructed into depth map data.
Homography: Homography is a concept in projective geometry, also known as projective transformation. It maps a point (three-dimensional homogeneous vector) on one projective plane to another projective plane, and maps a straight line to a straight line while preserving collinearity.

In the field of visual inspection, the visual inspection includes 2D visual inspection and 3D visual inspection. Wherein the 2D visual inspection mainly involves capturing RGB images of object surfaces with industrial cameras, followed by combining with relevant image processing algorithms to achieve the visual inspection; the 3D visual inspection mainly employs 3D cameras, such as RGB-D cameras, line laser profile scanners and the like, through interactions of optical information and logical operations, it can reconstruct a point cloud map or depth map representing the surface morphology of the workpiece without contacting the workpiece, thereby achieving visual inspection purposes such as non-contact high-precision dimension measurement or defect detection.

Referring to Fig. 1, a typical line laser 3D camera has a main optical structure consisting of one laser emitter and one area scan industrial camera. After camera displacement occurs, there will be a certain blind spot in the field of view; and such cameras exhibit poor noise resistance under conditions of stray light and high-reflection scenes.

To address at least one of the above problems, an embodiment of the present application provides a three-dimensional profiler. Referring to Fig. 2, the three-dimensional profiler shown in Fig. 2 comprises: a first area scan camera, a second area scan camera, a laser and a processor (not shown); wherein the first area scan camera comprises a first area scan sensor and a first lens, and the second area scan camera comprises a second area scan sensor and a second lens;
the laser is arranged between the first area scan camera and the second area scan camera; a lens plane of the first lens, an imaging plane of the first area scan sensor, a lens plane of the second lens, an imaging plane of the second area scan sensor, and a laser plane of the laser intersect on a same straight line;
the laser is configured for emitting a laser beam;
the first area scan camera is configured for capturing a first laser gray scale image of an object to be measured; the second area scan camera is configured for capturing a second laser gray scale image of the object to be measured;
the processor is configured for determining a three-dimensional profile of the object to be measured by combining the first laser gray scale image and the second laser gray scale image.

Wherein the lens plane of the first lens, the imaging plane of the first area scan sensor, the lens plane of the second lens, the imaging plane of the second area scan sensor, and the laser plane of the laser intersect on the same straight line. By focusing, a focal plane of the first area scan sensor and a focal plane of the second area scan sensor can coincide with the laser plane, so that each of the imaging planes, each of the lens planes and each of the focal planes intersect on a same straight line, forming a scheimpflug optical architecture. In addition, since the focal plane of the first area scan and the focal plane of the second area scan sensor coincide with the laser plane, reflected points always lie within the focal plane regardless of where the laser reflection occurs. As a result, the imaging of the laser line is always clear and will not be defocused.

In the embodiment of the present application, the main optical structure of the three-dimensional profiler comprises one laser emitter, two lenses and two area scan sensors. The lens plane of the first lens, the imaging plane of the first area scan sensor, the lens plane of the second lens, the imaging plane of the second area scan sensor and the laser plane of the laser intersect on the same straight line, by focusing, a scheimpflug optical architecture can be formed, which can greatly utilize the depth of field and measure a larger effective range. Compared to a line scan camera which requires frequent adjustment of an intersection position between the line scan camera and a laser plane, the three-dimensional profiler provided in the embodiment of the present application does not require adjustment of the overall structure during subsequent use, making it more flexible to use.

In addition, compared to a solution of a monocular camera+line laser, the embodiment of the present application adopts a dual camera+line laser+scheimpflug imaging, which uses dual cameras for multi-angle shooting, so that the measurement fields of the two cameras complement each other, effectively reducing blind spots in shooting. Therefore, it can capture the overall three-dimensional data of the object, reducing the problem of missed detections caused by blind spots. Meanwhile, for deep scratch defects, the multi-angle shooting can capture the bottom of the scratch and effectively measure a depth of the scratch. The solution using binocular cameras for shooting and stitching can also reduce the problem of reflection in single angle shooting, it can judge and remove interference such as stray light based on the imaging differences between the two cameras, effectively improving the robustness of the device to deal with interference such as stray light and reflection; and it can support online detection, and may be directly deployed and applied on production lines due to its extremely high detection efficiency. The overall structural design is simple, the fixture installation is convenient, which is very conducive to the promotion of online detection technology, does not rely on external special optical equipment, and has low cost and better stability.

Moreover, in the embodiment of the present application, the area scan cameras with larger shooting areas are employed and combined into a scheimpflug optical architecture, which, compares to the line area scan cameras, can effectively increase the detection range, therefore reducing the adjustment of the structure of the three-dimensional profiler. In addition, removing interference such as stray light according to the determination of imaging difference between two area scan cameras can effectively improve the robustness of a device against the interference such as the stray light and the reflected light.

In one possible implementation, the laser is a line laser intended to emitting a line laser beam. Structured light apparatus using lasers are more convenient than those in prior art.

In one example, the first area scan camera and the second area scan camera may be arranged to be mirror-distributed with the laser plane of the laser as the axis of symmetry. However, during actual production, the two may be arranged to be in a non-mirror distribution due to processing errors and assembly errors and so on. Therefore, it is necessary to calibrate the transformation relationship between the camera coordinate system of the first area scan camera and the camera coordinate system of the second area scan camera. The calibration process of the transformation may be referred to prior art and is not specifically limited in this application.

How to use the processor to obtain a more precise three-dimensional profile of the object to be measured in this case is explained bellow. In addition, the following embodiments can be used not only in this case, but also in other cases requiring more precise three-dimensional profiles.

In one possible implementation, the processor may specifically be configured for: transforming the first laser gray scale image and the second laser gray scale image into a same camera coordinate system, and fusing the first laser gray scale image and the second laser gray scale image in the same camera coordinate system to obtain a first fused image; detecting laser stripe center points on the first fused image to obtain first camera coordinates of the laser stripe center points; transforming the first camera coordinates of the laser stripe center points into a three-dimensional space coordinate system to obtain first three-dimensional point cloud coordinates of the laser stripe center points; and determining the three-dimensional profile of the object to be measured based on the first three-dimensional point cloud coordinates of the laser stripe center points.

The aforementioned process of transforming the first laser gray scale image and the second laser gray scale image into the same camera coordinate system can be achieved by transforming the first laser gray scale image into the coordinate system of the second laser gray scale image through a homography relationship, or by transforming the second laser gray scale image into the coordinate system of the first laser gray scale image through a homography relationship. In this case, the homography relationship is a homography relationship between the imaging plane of the first area scan sensor and the imaging plane of the second area scan sensor. Specifically, the homography relationship can be obtained by calibrating the imaging plane of the first area scan sensor and the imaging plane of the second area scan sensor, or by separately calibrating the imaging plane of the first area scan sensor and the imaging plane of the second area scan sensor with the laser plane as a medium. Moreover, the first laser gray scale image and the second laser gray scale image may be transformed to preset coordinates through their respective homography relationships, wherein the homography relationships are a homography relationship between the imaging plane of the first area scan sensor and a preset plane and a homography relationship between the imaging plane of the second area scan sensor and a preset plane, respectively. The determination of the homography relationship as described above may refer to prior art, such as determining a homography relationship by key point calibration. Robustness of a device against stray light and reflected light may be improved by combining with the homography relationship between binocular cameras.

Approaches to carry on fusion as described above may refer to prior art, and may be carried on by way of taking intersection after gray scale segmentation or taking the mean.

The above step of obtaining the first three-dimensional point cloud coordinates of the laser stripe center points can be achieved by mapping the first camera coordinates of the laser stripe center points to spatial point cloud coordinates on the laser plane, thereby obtaining the first three-dimensional point cloud coordinates of the laser stripe center points.

In the embodiment of the present application, the processor obtains a first fused image by transforming the first laser gray scale image and the second laser gray scale image into the same camera coordinate system, and fusing them; and detects laser stripe center points on the fused image and transforms the detected coordinates into a three-dimensional space coordinate system to obtain a three-dimensional profile of the object to be measured. Since center points of the fused image are extracted, the interference caused by reflection can be effectively eliminated, since interferences such as stray light and reflected light often occurs at specific angles. The embodiment of the present application fuses the results of binocular measurement, such that the robustness against the interference of reflected light is effectively improved, therefore enable a more precise three-dimensional profile of the object to be measured finally determined. A precise three-dimensional profile is ensured even in the presence of processing errors and assembly errors.

In one possible implementation, the processor may specifically be configured for: detecting laser stripe center points on the first laser gray scale image to obtain a first center point area and detecting laser stripe center points on the second laser gray scale image to obtain a second center point area; transforming the first center point area and the second center point area into a same camera coordinate system; fusing the first center point area and the second center point area in the same camera coordinate system to obtain a fused center point area; acquiring second camera coordinates of the fused center point area in the same camera coordinate system and transforming the second camera coordinates into a three-dimensional space coordinate system to obtain second three-dimensional point cloud coordinates; and determining the three-dimensional profile of the object to be measured based on the second three-dimensional point cloud coordinates.

The first center point area described above includes position of each of center points, and the position of each center point is center point coordinates of each laser stripe in the first laser gray scale image obtained after detecting laser stripe center points on the first laser gray scale image; the second center point area described above includes position of each of center points, and the position of each center point is center point coordinates of each laser stripe in the second laser gray scale image obtained after detecting laser stripe center points on the second laser gray scale image.

The step of transforming the first center point area and the second center point area into the same camera coordinate system described above can be achieved by transforming the first center point area into the coordinate system of the second laser gray scale image through a homography relationship, or by transforming the second center point area into the coordinate system of the first laser gray scale image through a homography relationship, or by transforming the first center point area and the second center point area into a preset coordinate system through their respective homography relationships.

The step of fusing the first center point area and the second center point area in the same camera coordinate system to obtain the fused center point area may specifically include: taking coordinates of laser stripe center points in the first center point area in the same camera coordinate system as center point coordinates of the fused center point area; or taking coordinates of laser stripe center points in the second center point area in the same camera coordinate system as center point coordinates of the fused center point area; or taking the mean of coordinates of laser stripe center points in the first center point area and coordinates of laser stripe center points in the second center point area in the same camera coordinate system as center point coordinates of the fused center point area.

In the embodiment of the present application, the detection results of the laser stripe center points transformed into the same camera coordinate system are fused, and the fused results are transformed into a three-dimensional space coordinate system, so as to determine the three-dimensional profile of the object to be measured. The robustness against interference of reflected light may be effectively improved, therefore enable a more precise three-dimensional profile of the object to be measured finally determined. A precise three-dimensional profile is ensured even in the presence of processing errors and assembly errors.

In one possible implementation, the processor may specifically be configured for: establishing correspondences between center point pixel columns in the first center point area and center point pixel columns in the second center point area based on positions of center point pixel columns in the first center point area and in the second center point area in the same camera coordinate system; for any two center point pixel columns with a correspondence, calculating a difference between the two center point pixel columns; in response to determining that the difference is less than a preset difference threshold, fusing the two center point pixel columns by means of a mean fusion method to obtain a fused pixel column of the two center point pixel columns; in response to determining that the difference is not less than the preset difference threshold, determining credibility of each of the two center point pixel columns respectively, and selecting a center point pixel column with the highest credibility from the two center point pixel columns as a fused pixel column of the two center point pixel columns; wherein the fused center point area comprises each fused pixel column.

Wherein the calculation of credibility may refer to prior art. In one example, noise ratio may be used as an indicator of the determination of credibility, and a center point pixel column with the lowest noise ratio may be selected as the center point pixel column with the highest credibility.

In the embodiment of the present application, in the same camera coordinate system, the difference is calculated respectively for a center point pixel column in the first center point area and a center point pixel column in the second center point area, which have a correspondence between column positions. Two center point pixel columns with a difference less than a preset difference threshold are fused by means of a mean fusion method. For two center point pixel columns with a difference not less than the preset difference threshold, one center point pixel column with the highest credibility therefrom is taken as a fused pixel column of the two center point pixel columns, so as to ensure that the accuracy of each fused pixel column finally obtained is higher, and each center point pixel in the fused center point area are more accurate, so that the three-dimensional profile of the object to be measured finally determined is more accurate. A precise three-dimensional profile is ensured even in the presence of processing errors and assembly errors.

In one possible implementation, the processor may specifically be configured for: detecting laser stripe center points on the first laser gray scale image to obtain a first center point area; detecting laser stripe center points on the second laser gray scale image to obtain a second center point area; acquiring third camera coordinates of the first center point area in a camera coordinate system of the first laser gray scale image and transforming the third camera coordinates into a three-dimensional space coordinate system to obtain third three-dimensional point cloud coordinates; acquiring fourth camera coordinates of the second center point area in a camera coordinate system of the second laser gray scale image and transforming the fourth camera coordinates into the three-dimensional space coordinate system to obtain fourth three-dimensional point cloud coordinates; performing point cloud fusion based on the third three-dimensional point cloud coordinates and the fourth three-dimensional point cloud coordinates to obtain fused three-dimensional point cloud coordinates; determining the three-dimensional profile of the object to be measured based on the fused three-dimensional point cloud coordinates.

In one example, the above three-dimensional space coordinate system is established on a laser plane, therefore the step of transforming the third camera coordinates into the three-dimensional space coordinate system to obtain the third three-dimensional point cloud coordinates can be: transforming the third camera coordinates into a laser plane coordinate system to obtain third three-dimensional point cloud coordinates based on a homography relationship between an imaging plane of the first area scan sensor and the laser plane; the step of transforming the fourth camera coordinates into the three-dimensional space coordinate system to obtain the fourth three-dimensional point cloud coordinates can be: transforming the fourth camera coordinates into a laser plane coordinate system to obtain fourth three-dimensional point cloud coordinates based on a homography relationship between an imaging plane of the second area scan sensor and the laser plane.

In the embodiment of the present application, the first center point area and the second center point area obtained by detecting laser stripe center points are transformed into the same three-dimensional space coordinate system based on their respective homography relationships, and point cloud fusion is performed. The three-dimensional profile of the object to be measured is determined based on the fused point cloud coordinates. The robustness against interference of reflected light may be effectively improved, therefore enable a more precise three-dimensional profile of the object to be measured finally determined. A precise three-dimensional profile is ensured even in the presence of processing errors and assembly errors.

In one possible implementation, the processor may specifically be configured for: acquiring correspondences between center points represented by the third three-dimensional point cloud coordinates and center points represented by the fourth three-dimensional point cloud coordinates; for any two center points with a correspondence, calculating a distance between the two center points based on the third three-dimensional point cloud coordinates and the fourth three-dimensional point cloud coordinates; in response to determining that the distance is less than a preset distance threshold, fusing the two center points by means of a mean fusion method to obtain a fused center point of the two center points; in response to determining that the distance is not less than the preset distance threshold, determining credibility of each of the two center points respectively and selecting a center point with highest credibility from the two center points as a fused center point of the two center points; wherein the fused three-dimensional point cloud coordinates comprises three-dimensional point cloud coordinates of each of fused center points.

Wherein the calculation of the credibility may refer to prior art. In particular, noise ratio, brightness of the laser beam or line width of the laser beam may be used as indicators of the determination of credibility.

The above step of acquiring correspondences between center points represented by the third three-dimensional point cloud coordinates and center points represented by the fourth three-dimensional point cloud coordinates may comprise: establishing correspondences between center points in the first center point area and center points in the second center point area based on positions of the center points in the first center point area and of the center points in the second center point area. In one example, a cloud point alignment algorithm may be used for acquiring correspondences between center points in different coordinate systems.

In the embodiment of the present application, a distance of one center point of center points represented by the third three-dimensional point cloud coordinates and one center point of center points represented by the fourth three-dimensional point cloud coordinates is calculated respectively, the above two center points have correspondence. Two center points whose distance is less than a preset distance threshold are fused by means of the mean fusion method. For two center points whose distance is not less than the preset distance threshold, a center point with the highest credibility from the two center points is taken as a fused center point of the two center points, thereby ensuring that the final fused center point pixels are more accurate, and thus making the three-dimensional profile of the object to be measured finally determined is more accurate. A precise three-dimensional profile is ensured even in the presence of processing errors and assembly errors.

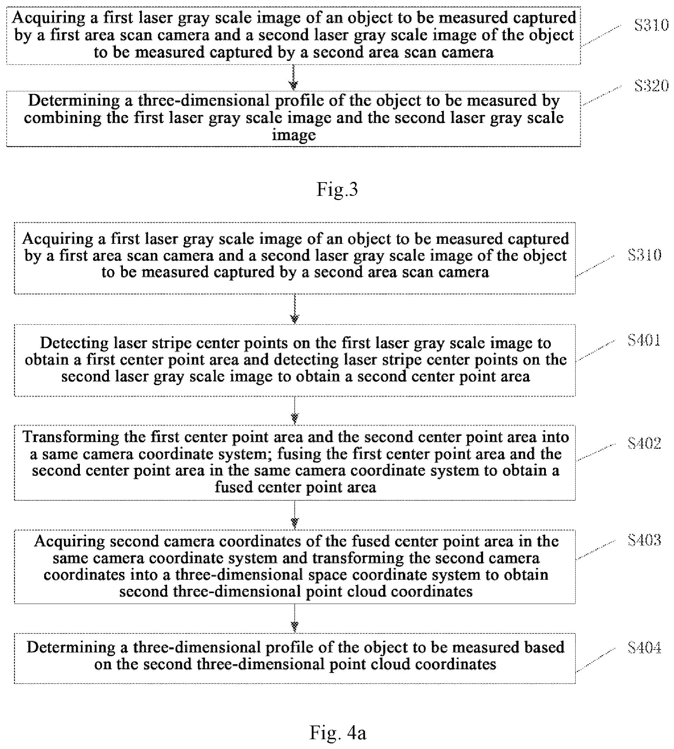

An embodiment of the present application further provide a three-dimensional profile establishment method applied to any one of the three-dimensional profilers above. Referring to Fig. 3, the method comprises:
S310, acquiring a first laser gray scale image of an object to be measured captured by a first area scan camera and a second laser gray scale image of the object to be measured captured by a second area scan camera;
S320, determining a three-dimensional profile of the object to be measured by combining the first laser gray scale image and the second laser gray scale image.

In the embodiment of the present application, laser gray scale images of an object to be measured captured by two cameras are used to determine a three-dimensional profile of the object to be measured. Since the measurement fields of view of the two cameras complement each other, the shooting blind spots are effectively reduced, thereby overall three-dimensional data of the object to be measured can be acquired.

In one possible implementation, the above step S320, determining a three-dimensional profile of the object to be measured by combining the first laser gray scale image and the second laser gray scale image, may specifically comprise: transforming the first laser gray scale image and the second laser gray scale image into a same camera coordinate system, and fusing the first laser gray scale image and the second laser gray scale image in the same camera coordinate system to obtain a first fused image; detecting laser stripe center points on the first fused image to obtain first camera coordinates of the laser stripe center points; transforming the first camera coordinates of the laser stripe center points into a three-dimensional space coordinate system to obtain first three-dimensional point cloud coordinates of the laser stripe center points; and determining the three-dimensional profile of the object to be measured based on the first three-dimensional point cloud coordinates of the laser stripe center points.

In the embodiment of the present application, the processor obtains a fused image by transforming the first laser gray scale image and the second laser gray scale image into the same camera coordinate system and fusing them; detects laser stripe center points on the fused image and transforms the detected coordinates into a three-dimensional space coordinate system, and further determines the three-dimensional profile of the object to be measured. Since center points of the fused image are extracted, the interference caused by reflection can be effectively eliminated, since interferences such as stray light and reflected light often occurs at specific angles. The embodiment of the present application fuses the results of binocular measurement, such that the robustness against interference of reflected light is effectively improved, therefore enable a more precise three-dimensional profile of the object to be measured finally determined.

In one possible implementation, refer to Fig. 4a, the above step S320, determining the three-dimensional profile of the object to be measured by combining the first laser gray scale image and the second laser gray scale image, may specifically comprise:
S401, detecting laser stripe center points on the first laser gray scale image to obtain a first center point area and detecting laser stripe center points on the second laser gray scale image to obtain a second center point area;
S402, transforming the first center point area and the second center point area into a same camera coordinate system; fusing the first center point area and the second center point area in the same camera coordinate system to obtain a fused center point area;
S403, acquiring second camera coordinates of the fused center point area in the same camera coordinate system and transforming the second camera coordinates into a three-dimensional space coordinate system to obtain second three-dimensional point cloud coordinates; and
S404, determining the three-dimensional profile of the object to be measured based on the second three-dimensional point cloud coordinates.

In the embodiment of the present application, the detection results of the laser stripe center points transformed into the same camera coordinate system are fused, and the fused results are transformed into a three-dimensional space coordinate system, thereby the three-dimensional profile of the object to be measured is determined. The robustness against interference of reflected light may be effectively improved, therefore enable a more precise three-dimensional profile of the object to be measured finally determined.

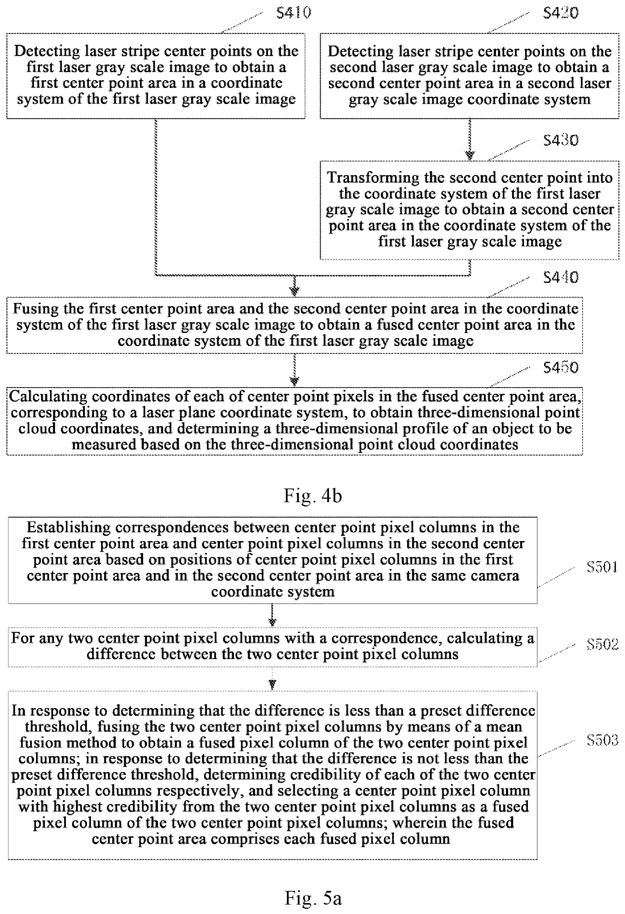

In one example, refer to Fig. 4b, the above step S320, determining the three-dimensional profile of the object to be measured by combining the first laser gray scale image and the second laser gray scale image, may specifically comprise:
S410, detecting laser stripe center points on the first laser gray scale image to obtain a first center point area in a coordinate system of the first laser gray scale image;
S420, detecting laser stripe center points on the second laser gray scale image to obtain a second center point area in a second laser gray scale image coordinate system;
S430, transforming the second center point into the coordinate system of the first laser gray scale image to obtain a second center point area in the coordinate system of the first laser gray scale image;
S440, fusing the first center point area and the second center point area in the coordinate system of the first laser gray scale image to obtain a fused center point area in the coordinate system of the first laser gray scale image;
S450, calculating coordinates of each of center point pixels in the fused center point area, corresponding to a laser plane coordinate system, to obtain three-dimensional point cloud coordinates, and determining a three-dimensional profile of an object to be measured based on the three-dimensional point cloud coordinates.

In one possible implementation, refer to Fig. 5a, the above step of fusing the first center point area and the second center point area in the same camera coordinate system to obtain the fused center point area may specifically comprise:
S501, establishing correspondences between center point pixel columns in the first center point area and center point pixel columns in the second center point area based on positions of center point pixel columns in the first center point area and in the second center point area in the same camera coordinate system;
S502, for any two center point pixel columns with a correspondence, calculating a difference between the two center point pixel columns;
S503, in response to determining that the difference is less than a preset difference threshold, fusing the two center point pixel columns by means of a mean fusion method to obtain a fused pixel column of the two center point pixel columns; in response to determining that the difference is not less than the preset difference threshold, determining credibility of each of the two center point pixel columns respectively, and selecting a center point pixel column with highest credibility from the two center point pixel columns as a fused pixel column of the two center point pixel columns; wherein the fused center point area comprises each fused pixel column.

In the embodiment of the present application, in the same camera coordinate system, the difference is calculated respectively for a center point pixel column in the first center point area and a center point pixel column in the second center point area, which have a correspondence between column positions. Two center point pixel columns with a difference less than a preset difference threshold are fused by means of a mean fusion method. For two center point pixel columns with a difference not less than the preset difference threshold, one center point pixel column with the highest credibility therefrom is taken as a fused pixel column of the two center point pixel columns, so as to ensure that the accuracy of each fused pixel column finally obtained is higher, and each center point pixel in the fused center point area are more accurate, so that the three-dimensional profile of the object to be measured finally determined is more accurate.

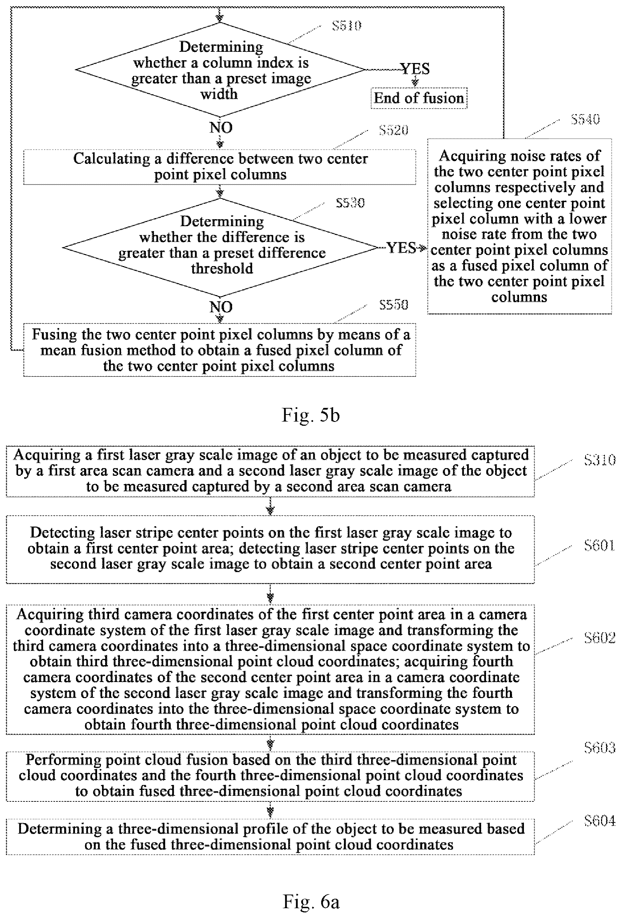

In one example, center point pixel columns in the first center point area and center point pixel columns in the second center point area in the same camera coordinate system correspond to each other in columns, that is, two columns sharing the same column index correspond to each other and they both have the same column width. Refer to Fig. 5b, the above step of fusing the first center point area and the second center point area in the same camera coordinate system to obtain the fused center point area may specifically comprise:
S510, determining whether a column index is greater than a preset image width.

The column index starts from zero and increments by one after each determination. The upper limit of the column index is the preset image width, which equals an image width of a laser gray scale image minus one. The laser gray scale image may be a first laser gray scale image or a second laser gray scale image, wherein the image widths of the first laser gray scale image and the second laser gray scale image are the same.

In response to determining that the column number is greater than the preset width of image, the fusion ends.

In response to determining that the column index is not greater than the preset width of image, go to S520, calculating a difference between two center point pixel columns.

In response to determining that the column index in step S510 is a first value, a difference between two center point pixel columns, that is, the *first value plus one* column in the first center point area and the *first value plus one* column in the second center point area, is calculated. For example, in response to determining that the column index in step S510 is zero, a difference between the two center point pixel columns, that is, the first center point pixel column in the first center point area and the first center point pixel column in the second center point area is calculated; in response to determining that the column index in step S510 is one, a difference between two center point pixel columns, that is, the second center point pixel column in the first center point area and the second center point pixel column in the second center point area is calculated.

S530, determining whether the difference is greater than a preset difference threshold.

In response to determining that the difference is greater than the preset difference threshold, S540, acquiring noise rates of the two center point pixel columns respectively and selecting one center point pixel column with a lower noise rate from the two center point pixel columns as a fused pixel column of the two center point pixel columns.

After completing step S540, return to step S510 and repeat.

In response to determining that the difference is not greater than the preset difference threshold, then go to S550, fusing the two center point pixel columns by means of a mean fusion method to obtain a fused pixel column of the two center point pixel columns.

After completing step S550, return to step S510 and repeat.

Wherein the fused center point area comprises each fused pixel column.

In one possible implementation, refer to Fig. 6a, the above step S320, determining the three-dimensional profile of the object to be measured by combining the first laser gray scale image and the second laser gray scale image, may specifically comprise:
S601, detecting laser stripe center points on the first laser gray scale image to obtain a first center point area; detecting laser stripe center points on the second laser gray scale image to obtain a second center point area;
S602, acquiring third camera coordinates of the first center point area in a camera coordinate system of the first laser gray scale image and transforming the third camera coordinates into a three-dimensional space coordinate system to obtain third three-dimensional point cloud coordinates; acquiring fourth camera coordinates of the second center point area in a camera coordinate system of the second laser gray scale image and transforming the fourth camera coordinates into the three-dimensional space coordinate system to obtain fourth three-dimensional point cloud coordinates;
S603, performing point cloud fusion based on the third three-dimensional point cloud coordinates and the fourth three-dimensional point cloud coordinates to obtain fused three-dimensional point cloud coordinates; and
S604, determining the three-dimensional profile of the object to be measured based on the fused three-dimensional point cloud coordinates.

In the embodiment of the present application, the first center point area and the second center point area obtained by detecting laser stripe center points are transformed into the same three-dimensional space coordinate system based on their respective homography relationships, and point cloud fusion is performed. The three-dimensional profile of the object to be measured is determined based on the fused point cloud coordinates. The robustness against interference of reflected light may be effectively improved, therefore enable a more precise three-dimensional profile of the object to be measured finally determined.

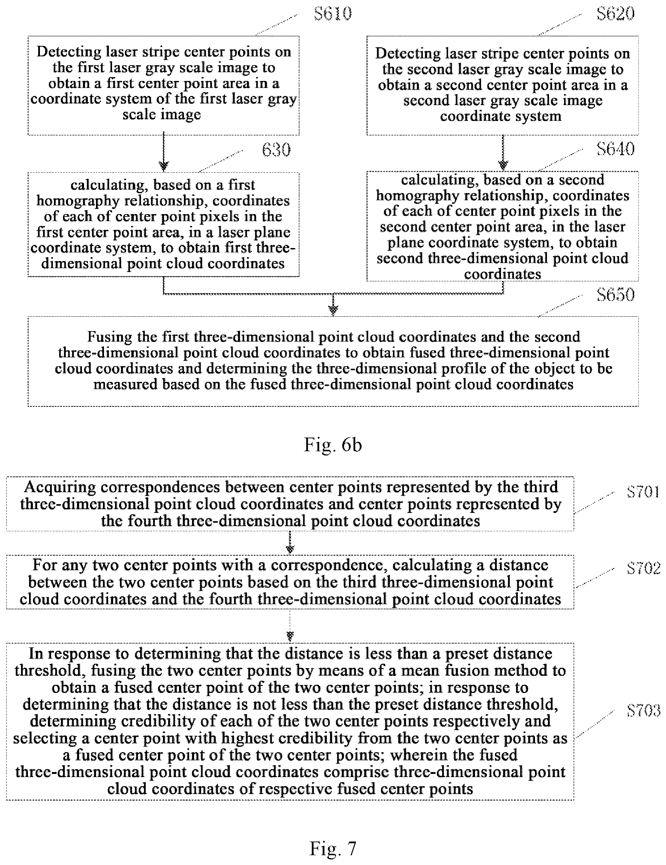

In one possible implementation, refer to Fig. 6b, the above step S320, determining the three-dimensional profile of the object to be measured by combining the first laser gray scale image and the second laser gray scale image, may specifically comprise:
S610, detecting laser stripe center points on the first laser gray scale image to obtain a first center point area in a coordinate system of the first laser gray scale image;
S620, detecting laser stripe center points on the second laser gray scale image to obtain a second center point area in a second laser gray scale image coordinate system;
S630, calculating, based on a first homography relationship, coordinates of each of center point pixels in the first center point area, in a laser plane coordinate system, to obtain first three-dimensional point cloud coordinates;
S640, calculating, based on a second homography relationship, coordinates of each of center point pixels in the second center point area, in the laser plane coordinate system, to obtain second three-dimensional point cloud coordinates;
S650, fusing the first three-dimensional point cloud coordinates and the second three-dimensional point cloud coordinates to obtain fused three-dimensional point cloud coordinates and determining the three-dimensional profile of the object to be measured based on the fused three-dimensional point cloud coordinates.

The above first homography relationship is a homography relationship between the imaging plane of the first area scan sensor and the laser plane, the above second homography relationship is a homography relationship between the imaging plane of the second area scan sensor and the laser plane.

In one possible implementation, refer to Fig. 7, the above step of performing point cloud fusion based on the third three-dimensional point cloud coordinates and the fourth three-dimensional point cloud coordinates to obtain the fused three-dimensional point cloud coordinates may specifically comprise:
S701, acquiring correspondences between center points represented by the third three-dimensional point cloud coordinates and center points represented by the fourth three-dimensional point cloud coordinates;
S702, for any two center points with a correspondence, calculating a distance between the two center points based on the third three-dimensional point cloud coordinates and the fourth three-dimensional point cloud coordinates;
S703, in response to determining that the distance is less than a preset distance threshold, fusing the two center points by means of a mean fusion method to obtain a fused center point of the two center points; in response to determining that the distance is not less than the preset distance threshold, determining credibility of each of the two center points respectively and selecting a center point with highest credibility from the two center points as a fused center point of the two center points; wherein the fused three-dimensional point cloud coordinates comprise three-dimensional point cloud coordinates of respective fused center points.

In the embodiment of the present application, a distance of one center point of center points represented by the third three-dimensional point cloud coordinates and one center point of center points represented by the fourth three-dimensional point cloud coordinates is calculated respectively, the above two center points have correspondence. Two center points whose distance is less than a preset distance threshold are fused by means of the mean fusion method. For two center points whose distance is not less than the preset distance threshold, a center point with the highest credibility from the two center points is taken as a fused center point of the two center points, thereby ensuring that the final fused center point pixels are more accurate, and thus making the three-dimensional profile of the object to be measured finally determined is more accurate.

Furthermore, the above step of determining the three-dimensional profile of the object to be measured by combining the first laser gray scale image and the second laser gray scale image may specifically refer to the description of functions of the processor.

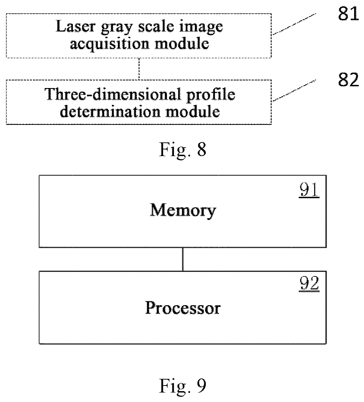

An embodiment of the present application further provides a three-dimensional profile establishment apparatus applied to any one of the three-dimensional profilers above. Referring to Fig. 8, the apparatus comprises:
a laser gray scale image acquisition module 81 configured for acquiring a first laser gray scale image of an object to be measured captured by a first area scan camera and a second laser gray scale image of the object to be measured captured by a second area scan camera;
a three-dimensional profile determination module 82 configured for determining a three-dimensional profile of the object to be measured by combining the first laser gray scale image and the second laser gray scale image.

In one possible implementation, the three-dimensional profile determination module comprises:
an image fusion submodule configured for transforming the first laser gray scale image and the second laser gray scale image into a same camera coordinate system, and fusing the first laser gray scale image and the second laser gray scale image in the same camera coordinate system to obtain a first fused image;
a first camera coordinates acquisition submodule configured for detecting laser stripe center points on the first fused image to obtain first camera coordinates of the laser stripe center points;
a first three-dimensional point cloud coordinates acquisition submodule configured for transforming the first camera coordinates of the laser stripe center points into a three-dimensional space coordinate system to obtain first three-dimensional point cloud coordinates of the laser stripe center points;
a first three-dimensional profile acquisition submodule configured for determining the three-dimensional profile of the object to be measured based on the first three-dimensional point cloud coordinates of the laser stripe center points.

In one possible implementation, the three-dimensional profile determination module comprises:
a first center point area acquisition module configured for detecting laser stripe center points on the first laser gray scale image to obtain a first center point area and detecting laser stripe center points on the second laser gray scale image to obtain a second center point area;
a fused center point area acquisition submodule configured for transforming the first center point area and the second center point area into a same camera coordinate system; fusing the first center point area and the second center point area in the same camera coordinate system to obtain a fused center point area;
a second three-dimensional point cloud coordinates acquisition submodule configured for acquiring second camera coordinates of the fused center point area in the same camera coordinate system and transforming the second camera coordinates into a three-dimensional space coordinate system to obtain second three-dimensional point cloud coordinates; and
a second three-dimensional profile acquisition submodule configured for determining the three-dimensional profile of the object to be measured based on the second three-dimensional point cloud coordinates.

In one possible implementation, the fused center point area acquisition submodule comprises:
a pixel column correspondence acquisition unit configured for establishing correspondences between center point pixel columns in the first center point area and center point pixel columns in the second center point area based on positions of center point pixel columns in the first center point area and in the second center point area in the same camera coordinate system;
a difference calculating unit configured for: calculating, for any two center point pixel columns with a correspondence, a difference between the two center point pixel columns;
a difference determination unit configured for fusing the two center point pixel columns by means of a mean fusion method to obtain a fused pixel column of the two center point pixel columns in response to determining that the difference is less than a preset difference threshold; determining credibility of each of the two center point pixel columns respectively and selecting a center point pixel column with highest credibility from the two center point pixel columns as a fused pixel column of the two center point pixel columns in response to determining that the difference is not less than the preset difference threshold; wherein the fused center point area comprises each fused pixel column.

In one possible implementation, the three-dimensional profile determination module comprises:
a second center point area acquisition submodule configured for detecting laser stripe center points on the first laser gray scale image to obtain a first center point area; detecting laser stripe center points on the second laser gray scale image to obtain a second center point area;
a third three-dimensional point cloud coordinates and fourth three-dimensional point cloud coordinates acquisition submodule configured for acquiring third camera coordinates of the first center point area in a camera coordinate system of the first laser gray scale image and transforming the third camera coordinates into a three-dimensional space coordinate system to obtain third three-dimensional point cloud coordinates; acquiring fourth camera coordinates of the second center point area in a camera coordinate system of the second laser gray scale image and transforming the fourth camera coordinates into the three-dimensional space coordinate system to obtain fourth three-dimensional point cloud coordinates;
a fused three-dimensional point cloud coordinates acquisition submodule configured for performing point cloud fusion based on the third three-dimensional point cloud coordinates and the fourth three-dimensional point cloud coordinates to obtain fused three-dimensional point cloud coordinates; and
a third three-dimensional profile acquisition submodule configured for determining the three-dimensional profile of the object to be measured based on the fused three-dimensional point cloud coordinates.

In one possible implementation, the fused three-dimensional point cloud coordinates acquisition submodule comprises:
a center point correspondence acquisition unit configured for acquiring correspondences between center points represented by the third three-dimensional point cloud coordinates and center points represented by the fourth three-dimensional point cloud coordinates;
a distance calculation unit configured for calculating, for any two center points with a correspondence, a distance between the two center points based on the third three-dimensional point cloud coordinates and the fourth three-dimensional point cloud coordinates;
a distance determination unit configured for fusing, in response to determining that the distance is less than a preset distance threshold, the two center points by means of a mean fusion method to obtain a fused center point of the two center points; determining, in response to determining that the distance is not less than the preset distance threshold, credibility of each of the two center points respectively and selecting a center point with highest credibility from the two center points as a fused center point of the two center points; wherein the fused three-dimensional point cloud coordinates comprise three-dimensional point cloud coordinates of respective fused center points.

Regarding the apparatus in the above embodiment, the specific manner in which each module performs operations has been described in detail in embodiments related to the methods, and no detailed elaboration or explanation will be provided here.

An embodiment of the present application further provide an electronic device, as shown in Fig. 9, including:
a memory 91 configured for storing a computer program;
a processor 92 configured for implementing any one of the three-dimensional profile establishment methods above when executing the computer program stored in the memory 91. The above electronic device may further include a communication bus and/or a communication interface. The processor 92, the communication interface and the memory 91 communicate with each other via the communication bus.

The communication bus mentioned in the above electronic device may be a Peripheral Component Interconnect (PCI) bus or an Extended Industry Standard Architecture (EISA) bus, etc. This communication bus may include an address bus, a data bus, a control bus and the like. For convenience of representation, this communication bus is only indicated with one thick line in figures, but it does not mean that there is only one bus or only one type of bus.

The communication interface is used for communication between the above electronic device and other devices.

The memory may include either a Random Access Memory (RAM) or a Non-Volatile memory (NVM), such as at least one disk memory. Optionally, the memory may also be at least one storage device located away from the aforementioned processor.

The above processors may be general-purpose processors, including Central Processing Unit (CPU), Network Processor (NP), etc.; it may also be a Digital Signal Processor (DSP), Application Specific Integrated Circuit (ASIC), Field-Programmable Gate Array (FPGA) or other programmable logic devices, discrete gates or transistor logic devices, discrete hardware components.

Another embodiment of the present application provides a computer readable storage medium having stored therein a computer program, which, when executed by a processor, causes the processor to carry out any one of the three-dimensional profile establishment methods above.

Yet another embodiment of the present application further provides a computer program product containing instructions, which, when running on a computer, cause the computer to carry out any one of the three-dimensional profile establishment methods in the embodiments described above.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable media may be magnetic media (such as a floppy disk, a hard disk, a magnetic tape), optical media (such as DVD) and the like.

It should be noted that in this article, relational terms such as first and second are only to distinguish one entity or operation from another, and do not necessarily require or imply any actual relationship or order between these entities or operations. Moreover, the terms "include", "comprise", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "comprising one..." do not exclude the existence of other identical elements in the process, method, article, or device that includes the elements.

The various embodiments in this specification are described in a relevant manner, and the same and similar parts between the various embodiments can be referred to each other, and each embodiment focuses on the differences from other embodiments. In particular, for the embodiments of system, since the description is basically similar to the embodiments of method, it is relatively simple, and the relevant points can be referred to the partial description of the embodiment of the method.

Embodiments as described hereinabove are only preferred embodiments of the present application and are not intended to limit the scope of protection of the application. Any modification, equivalent replacements, improvements, etc. made within the spirit and principles of the application shall be included within the scope of protection of the present application.

## Claims

1. A three-dimensional profiler, comprising: a first area scan camera, a second area scan camera, a laser and a processor; wherein the first area scan camera comprises a first area scan sensor and a first lens, and the second area scan camera comprises a second area scan sensor and a second lens;
the laser is arranged between the first area scan camera and the second area scan camera; a lens plane of the first lens, an imaging plane of the first area scan sensor, a lens plane of the second lens, an imaging plane of the second area scan sensor, and a laser plane of the laser intersect on a same straight line;
the laser is configured for emitting a laser beam;
the first area scan camera is configured for capturing a first laser gray scale image of an object to be measured; the second area scan camera is configured for capturing a second laser gray scale image of the object to be measured;
the processor is configured for determining a three-dimensional profile of the object to be measured by combining the first laser gray scale image and the second laser gray scale image.

2. The three-dimensional profiler according to claim 1, wherein the laser is a line laser, and the line laser is configured for emitting a line laser beam.

3. The three-dimensional profiler according to claim 1 or 2, wherein the processor is specifically configured for: transforming the first laser gray scale image and the second laser gray scale image into a same camera coordinate system, and fusing the first laser gray scale image and the second laser gray scale image in the same camera coordinate system to obtain a first fused image; detecting laser stripe center points on the first fused image to obtain first camera coordinates of the laser stripe center points; transforming the first camera coordinates of the laser stripe center points into a three-dimensional space coordinate system to obtain first three-dimensional point cloud coordinates of the laser stripe center points; and determining the three-dimensional profile of the object to be measured based on the first three-dimensional point cloud coordinates of the laser stripe center points.

4. The three-dimensional profiler according to claim 1 or 2, wherein the processor is specifically configured for: detecting laser stripe center points on the first laser gray scale image to obtain a first center point area and detecting laser stripe center points on the second laser gray scale image to obtain a second center point area; transforming the first center point area and the second center point area into a same camera coordinate system; fusing the first center point area and the second center point area in the same camera coordinate system to obtain a fused center point area; acquiring second camera coordinates of the fused center point area in the same camera coordinate system and transforming the second camera coordinates into a three-dimensional space coordinate system to obtain second three-dimensional point cloud coordinates; and determining the three-dimensional profile of the object to be measured based on the second three-dimensional point cloud coordinates.

5. The three-dimensional profiler according to claim 4, wherein the processor is specifically configured for: establishing correspondences between center point pixel columns in the first center point area and center point pixel columns in the second center point area based on positions of center point pixel columns in the first center point area and in the second center point area in the same camera coordinate system; for any two center point pixel columns with a correspondence, calculating a difference between the two center point pixel columns; in response to determining that the difference is less than a preset difference threshold, fusing the two center point pixel columns by means of a mean fusion method to obtain a fused pixel column of the two center point pixel columns; in response to determining that the difference is not less than the preset difference threshold, determining credibility of each of the two center point pixel columns respectively, and selecting a center point pixel column with highest credibility from the two center point pixel columns as a fused pixel column of the two center point pixel columns; wherein the fused center point area comprises each fused pixel column.

6. The three-dimensional profiler according to claim 1 or 2, wherein the processor is specifically configured for: detecting laser stripe center points on the first laser gray scale image to obtain a first center point area; detecting laser stripe center points on the second laser gray scale image to obtain a second center point area; acquiring third camera coordinates of the first center point area in a camera coordinate system of the first laser gray scale image and transforming the third camera coordinates into a three-dimensional space coordinate system to obtain third three-dimensional point cloud coordinates; acquiring fourth camera coordinates of the second center point area in a camera coordinate system of the second laser gray scale image and transforming the fourth camera coordinates into the three-dimensional space coordinate system to obtain fourth three-dimensional point cloud coordinates; performing point cloud fusion based on the third three-dimensional point cloud coordinates and the fourth three-dimensional point cloud coordinates to obtain fused three-dimensional point cloud coordinates; and determining the three-dimensional profile of the object to be measured based on the fused three-dimensional point cloud coordinates.

7. The three-dimensional profiler according to claim 6, wherein the processor is specifically configured for: acquiring correspondences between center points represented by the third three-dimensional point cloud coordinates and center points represented by the fourth three-dimensional point cloud coordinates; for any two center points with a correspondence, calculating a distance between the two center points based on the third three-dimensional point cloud coordinates and the fourth three-dimensional point cloud coordinates; in response to determining that the distance is less than a preset distance threshold, fusing the two center points by means of a mean fusion method to obtain a fused center point of the two center points; in response to determining that the distance is not less than the preset distance threshold, determining credibility of each of the two center points respectively and selecting a center point with highest credibility from the two center points as a fused center point of the two center points; wherein the fused three-dimensional point cloud coordinates comprise three-dimensional point cloud coordinates of respective fused center points.

8. A three-dimensional profile establishment method, applied to the three-dimensional profiler according to any one of claims 1-7, and comprising:
acquiring a first laser gray scale image of an object to be measured captured by a first area scan camera and a second laser gray scale image of the object to be measured captured by a second area scan camera;
determining a three-dimensional profile of the object to be measured by combining the first laser gray scale image and the second laser gray scale image.

9. The method according to claim 8, wherein determining the three-dimensional profile of the object to be measured by combining the first laser gray scale image and the second laser gray scale image comprises:
transforming the first laser gray scale image and the second laser gray scale image into a same camera coordinate system, and fusing the first laser gray scale image and the second laser gray scale image in the same camera coordinate system to obtain a first fused image;
detecting laser stripe center points on the first fused image to obtain first camera coordinates of the laser stripe center points;
transforming the first camera coordinates of the laser stripe center points into a three-dimensional space coordinate system to obtain first three-dimensional point cloud coordinates of the laser stripe center points; and
determining the three-dimensional profile of the object to be measured based on the first three-dimensional point cloud coordinates of the laser stripe center points.

10. The method according to claim 8, wherein determining the three-dimensional profile of the object to be measured by combining the first laser gray scale image and the second laser gray scale image comprises:
detecting laser stripe center points on the first laser gray scale image to obtain a first center point area and detecting laser stripe center points on the second laser gray scale image to obtain a second center point area;
transforming the first center point area and the second center point area into a same camera coordinate system; fusing the first center point area and the second center point area in the same camera coordinate system to obtain a fused center point area;
acquiring second camera coordinates of the fused center point area in the same camera coordinate system and transforming the second camera coordinates into a three-dimensional space coordinate system to obtain second three-dimensional point cloud coordinates; and
determining the three-dimensional profile of the object to be measured based on the second three-dimensional point cloud coordinates.

11. The method according to claim 10, wherein fusing the first center point area and the second center point area in the same camera coordinate system to obtain the fused center point area comprises:
establishing correspondences between center point pixel columns in the first center point area and center point pixel columns in the second center point area based on positions of center point pixel columns in the first center point area and in the second center point area in the same camera coordinate system;
for any two center point pixel columns with a correspondence, calculating a difference between the two center point pixel columns;
in response to determining that the difference is less than a preset difference threshold, fusing the two center point pixel columns by means of a mean fusion method to obtain a fused pixel column of the two center point pixel columns;
in response to determining that the difference is not less than the preset difference threshold, determining credibility of each of the two center point pixel columns respectively, and selecting a center point pixel column of with highest credibility from the two center point pixel columns as a fused pixel column of the two center point pixel columns;
wherein the fused center point area comprises each fused pixel column.

12. The method according to claim 8, wherein determining the three-dimensional profile of the object to be measured by combining the first laser gray scale image and the second laser gray scale image comprises:
detecting laser stripe center points on the first laser gray scale image to obtain a first center point area; detecting laser stripe center points on the second laser gray scale image to obtain a second center point area;
acquiring third camera coordinates of the first center point area in a camera coordinate system of the first laser gray scale image and transforming the third camera coordinates into a three-dimensional space coordinate system to obtain third three-dimensional point cloud coordinates; acquiring fourth camera coordinates of the second center point area in a camera coordinate system of the second laser gray scale image and transforming the fourth camera coordinates into the three-dimensional space coordinate system to obtain fourth three-dimensional point cloud coordinates;
performing point cloud fusion based on the third three-dimensional point cloud coordinates and the fourth three-dimensional point cloud coordinates to obtain fused three-dimensional point cloud coordinates; and
determining the three-dimensional profile of the object to be measured based on the fused three-dimensional point cloud coordinates.

13. The method according to claim 12, wherein performing point cloud fusion based on the third three-dimensional point cloud coordinates and the fourth three-dimensional point cloud coordinates to obtain the fused three-dimensional point cloud coordinates comprises:
acquiring correspondences between center points represented by the third three-dimensional point cloud coordinates and center points represented by the fourth three-dimensional point cloud coordinates;
for any two center points with a correspondence, calculating a distance between the two center points based on the third three-dimensional point cloud coordinates and the fourth three-dimensional point cloud coordinates;
in response to determining that the distance is less than a preset distance threshold, fusing the two center points by means of a mean fusion method to obtain a fused center point of the two center points;
in response to determining that the distance is not less than the preset distance threshold, determining credibility of each of the two center points respectively and selecting a center point with highest credibility from the two center points as a fused center point of the two center points;
wherein the fused three-dimensional point cloud coordinates comprise three-dimensional point cloud coordinates of respective fused center points.

14. A three-dimensional profile establishment apparatus, applied to the three-dimensional profiler according to any one of claims 1-7, and comprising:
a laser gray scale image acquisition module configured for acquiring a first laser gray scale image of an object to be measured captured by a first area scan camera and a second laser gray scale image of the object to be measured captured by a second area scan camera;
a three-dimensional profile determination module configured for determining a three-dimensional profile of the object to be measured by combining the first laser gray scale image and the second laser gray scale image.

15. An electronic device, comprising:
a memory for storing a computer program;
a processor for implementing the method of any one of claims 8-13 when executing the computer program stored in the memory.

16. A computer readable storage medium having stored therein a computer program, which, when executed by a processor, causes the processor to carry out the method in any one of claims 8-13.
